Europäisches Patentamt

European Patent Office

Office européen des brevets

(11) Veröffentlichungsnummer : **0 328 483 B1**

(12) # EUROPÄISCHE PATENTSCHRIFT

(45) Veröffentlichungstag der Patentschrift :
08.01.92 Patentblatt 92/02

(51) Int. Cl.$^5$ : **G01N 21/25, G01J 3/28, G01N 21/47**

(21) Anmeldenummer : 89810059.9

(22) Anmeldetag : 24.01.89

(54) **Handgerät zur Erfassung photometrischer Daten.**

(30) Priorität : 02.02.88 CH 362/88

(43) Veröffentlichungstag der Anmeldung :
16.08.89 Patentblatt 89/33

(45) Bekanntmachung des Hinweises auf die
Patenterteilung :
08.01.92 Patentblatt 92/02

(84) Benannte Vertragsstaaten :
CH DE FR GB IT LI

(56) Entgegenhaltungen :
EP-A- 0 171 360

(73) Patentinhaber : GRETAG Aktiengesellschaft
Althardstrasse 70
CH-8105 Regensdorf (CH)

(72) Erfinder : Berner, Markus
Adliboden 10
CH-8155 Niederhasli (CH)
Erfinder : Schrämmli, Fortunat
Iltisstrasse 462
CH-5212 Hausen (CH)
Erfinder : Feri, Lido
Landstrasse 148
CH-5412 Nussbaumen (CH)
Erfinder : Koch, Wilhelm Heinrich
Oberdorfstrasse 18
CH-8112 Otelfingen (CH)

(74) Vertreter : Kleewein, Walter, Dr. et al
Patentabteilung CIBA-GEIGY AG Postfach
CH-4002 Basel (CH)

## Beschreibung

Die Erfindung betrifft ein Handgerät zur Erfassung photometrischer Daten gemäß dem Oberbegriff der Ansprüche 1 und 12.

Ein derartiges Aufsichts-Hand-Densitometer für die graphische Industrie ist aus der EP 171360 A2 bekannt und gestattet es, bei ausgefahrenem Meßkopf ein Filterrad zweimal vollständig zu drehen, während der mit der Kulissenführung zusammenwirkende Antriebsteller lediglich einen Drehwinkel von etwa 90° ausführt. Die dabei verwendete Übersetzung erhöht nicht nur den Drehwinkel, sondern vergrößert auch Positionierungsfehler des Antriebstellers, weshalb es die bekannte Mechanik nicht gestattet, genaue Winkelpositionierungen des Filterrades vorzunehmen. Der an dem Antriebsteller angeordnete Kurbelzapfen steht mit der Kulissenführung dauernd in Eingriff, die eine spezielle angepaßte Formgebung aufweist.

Ausgehend von diesem Stand der Technik liegt der Erfindung die Aufgabe zugrunde, ein Handgerät der eingangs genannten Art zu schaffen, bei dem mit Hilfe eines einzigen Antriebsmotors sowohl eine genaue Positionierung des Meßwagens als auch eine präzise Erfassung densitometrischer und/oder farbmetrischer Daten möglich ist.

Diese Aufgabe wird erfindungsgemäß durch die Merkmale des Kennzeichens der Ansprüche 1 oder 12 gelöst.

Bei einem zweckmäßigen Ausführungsbeispiel der Erfindung ist die in ihrer Drehposition präzise einstellbare Welle mit der Halterung für das Beugungsgitter eines Monochromators verbunden. Die dem Kurbelzapfen des Antriebstellers zugeordnete Kulissenführung besteht aus einer in einem feststehenden Teil ausgebildeten Führungsnut, die in Bewegungsrichtung des Kurbelzapfens an einem Ende offen ist, so daß der Kurbelzapfen aus dem Eingriff der Kulissenführungsnut herausgedreht werden kann. Auf diese Weise ist es möglich, den Antrieb der Gitterwelle des Monochromators vom Antrieb des Meßwagens zu entkoppeln.

Um bei ausgekoppeltem Kurbelzapfen sicherzustellen, daß der Meßwagen in einer vorgegebenen präzisen Position verbleibt, ist eine Verriegelungseinrichtung vorgesehen, die durch die Drehstellung des Antriebstellers betätigt wird. Die Verriegelungseinrichtung besteht bei einem Ausführungsbeispiel der Erfindung aus einem zweiarmigen Verriegelungshebel, der an einem Ende einen Verriegelungszapfen aufweist, der in eine ortsfeste Verriegelungsnut absenkbar ist, wenn ein am gegenüberliegenden Ende vorgesehener Abtaststift eine Schaltkurve durchläuft, die auf der dem Kurbelzapfen gegenüberliegenden Seite des Antriebstellers ausgebildet ist.

Besonders vorteilhafte Ausführungsformen und Weiterbildungen ergeben sich aus den Unteransprüchen.

Nachfolgend wird ein Ausführungsbeispiel der Erfindung anhand der Zeichnung näher erläutert. Es zeigen:

Fig. 1    eine Seitenansicht des erfindungsgemäßen Handgerätes, teilweise im Schnitt,

Fig. 2    eine Draufsicht auf das Handgerät,

Fig. 3    ein Ausführungsbeispiel für einen Meßwagen-und Gitterantrieb des Handgerätes in einer Ruheposition in einer Draufsicht,

Fig. 4    eine der Fig. 3 entsprechende Darstellung, bei der sich der Meßwagen in der Meßposition befindet,

Fig. 5    eine schematische Darstellung zur Veranschaulichung der Kinematik des Meßwagenantriebs und der Meßwagenverriegelung in der Ruheposition,

Fig. 6    eine der Fig. 5 entsprechende Darstellung am Ende des Meßwagenvorschubs,

Fig. 7    eine der Fig. 5 entsprechende Darstellung nach der Verriegelung des Meßwagens und

Fig. 8    eine der Fig. 5 entsprechende Darstellung nach dem Herausdrehen des Kurbelzapfens aus der Kulissenführungsnut bei eingeklinkter Verriegelungseinrichtung.

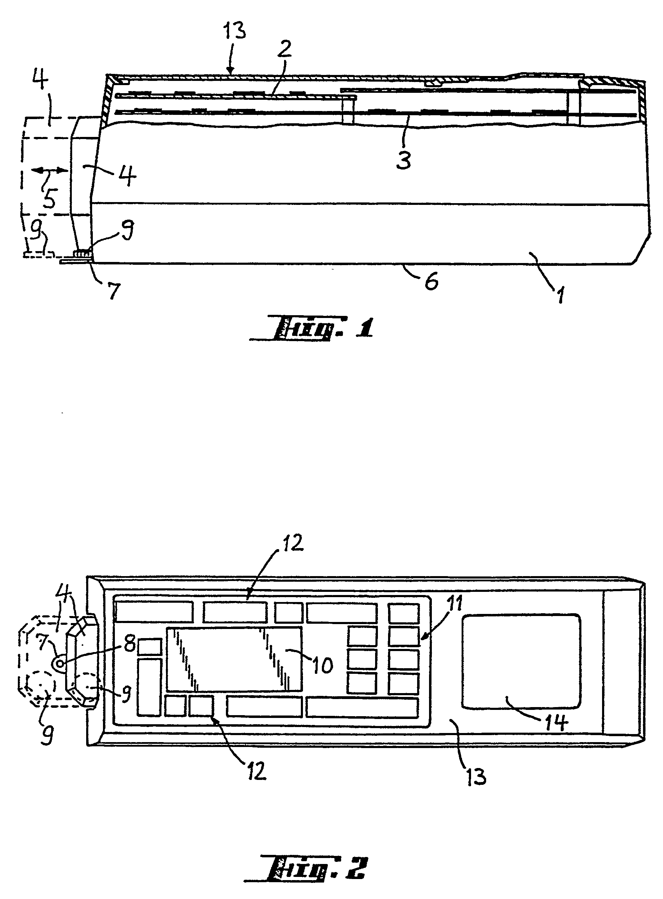

Das in Fig. 1 in einer Seitenansicht teilweise aufgeschnitten dargestellte Gerät entspricht in seinen äußeren Abmaßen einem Aufsichts-Hand-Densitometer und ist daher entsprechend kompakt aufgebaut. Im Gegensatz zu einem üblichen Densitometer gestattet es das in Fig. 1 dargestellte Handgerät jedoch, neben densitometrischen Größen auch farbmetrische Größen zu erfassen.

Das Handgerät verfügt über ein Gehäuse 1, in dem eine oder mehrere Printplatten 2, 3 für eine Meßwertverarbeitungs- und Steuerlogik angeordnet sind, was im oberen Teil des aufgeschnittenen Gehäuses 1 schematisch dargestellt ist.

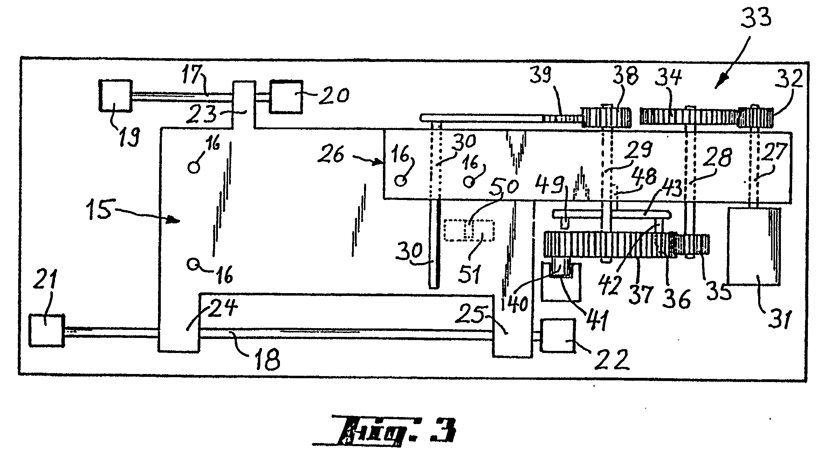

Aus der linken Seitenwand des Gehäuses 1 ragt ein Meßkopf 4 heraus, der zwischen einer in Fig. 1 mit durchgezogenen Linien dargestellten Ruhestellung und einer in Fig. 1 gestrichelt dargestellten Arbeitsstellung entlang dem Doppelpfeil 5 parallel zum Boden 6 des Gehäuses 1 verfahren werden kann. In der eingefahrenen Ruhestellung ragt eine Visierplatte 7 über den Rand des Meßkopfes 4 hinaus, was insbesondere in Fig. 2 deutlich zu erkennen ist. Die Visierplatte 7 verfügt über eine Meßblende 8, die dazu dient, die Lage und Größe des Meßfleckes der Meßkopfes 4 in der Arbeitsstellung anzuzeigen und Streulicht abzuschirmen.

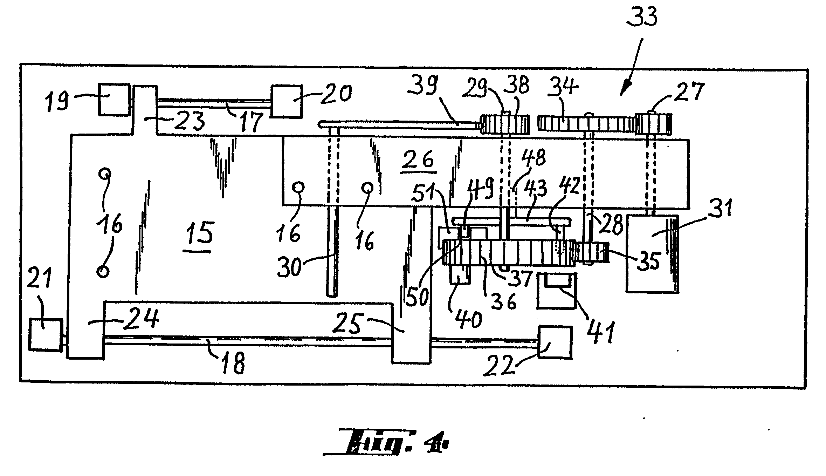

Wenn der Meßkopf 4 aus der in den Fig. 1 und 2 dargestellten Ruhestellung in die in den Fig. 1 und 2 gestrichelt dargestellte Arbeitsstellung oder Meßposition ausgefahren ist, verläuft die optisch wirksame Achse des Meßkopfes 4 genau durch den Mittelpunkt der Meßblende 8. Die dazu verwendete Mechanik ist weiter unten anhand der Fig. 3 bis 8 beschrieben.

In den Fig. 1 und 2 erkennt man weiterhin einen Filterradantrieb 9, der mit einem im Meßkopf 4 vorgesehenen Filterrad in Eingriff steht und es gestattet, in den Strahlengang des Meßkopfes 4 je nach Wunsch einen Polarisator für das Messen nasser Druckbogen, ein D65-Konversionsfilter für die Berücksichtigung der Fluoreszenz oder eine Blende ohne Filter einzubringen. Der Filterradantrieb 9 hat somit drei Positionen, die von Hand eingestellt werden, jedoch auf einem Anzeigefeld 10, beispielsweise einem Flüssigkristall-Display, dargestellt werden können.

Das Anzeigefeld 10 dient auch zur Darstellung der mit dem Handgerät erfaßten Meßwerte in numerischer Form oder in Gestalt von Spektren oder Balkendiagrammen. Zur Bedienung des Handgerätes sind um das Anzeigefeld 10 eine Reihe von Tasten eine Tastatur 11 sowie mehrere den Anzeigen auf dem Anzeigefeld 10 zugeordnete Hinweisfelder 12 vorgesehen. Das Anzeigefeld 10, die Tastatur und die Hinweisfelder 12 befinden sich auf der Oberseite 13 des Gehäuses 1, wobei auf der von dem Meßkopf 4 wegweisenden Seite eine großflächige Meßtaste 14 zum Auslösen eines Meßvorganges vorgesehen ist.

Beim Betätigen der Meßtaste 14 wird die Meßwertverarbeitungs- und Steuerlogik veranlaßt, den Meßkopf 4 aus der Ruhestellung in die Arbeitsstellung zu verfahren, um mit Hilfe einer im Innern des Gehäuses 1 vorgesehenen Spektralkammer mit einem Beugungsgitter das Spektrum des Lichtes zu erfassen, das beispielsweise von einem Druckbogen, auf dem das Handgerät ruht, an der Stelle der Meßblende 8 remittiert wird. Die Verarbeitung des Remissions-Spektrums erfolgt mit Hilfe der Meßwertverarbeitungs- und Steuerlogik. Nach dem Erfassen des Spektrums fährt der Meßkopf 4 wieder in seine Ruhestellung zurück, bis ein erneuter Meßvorgang durch Betätigen der Meßtaste 14 ausgelöst wird.

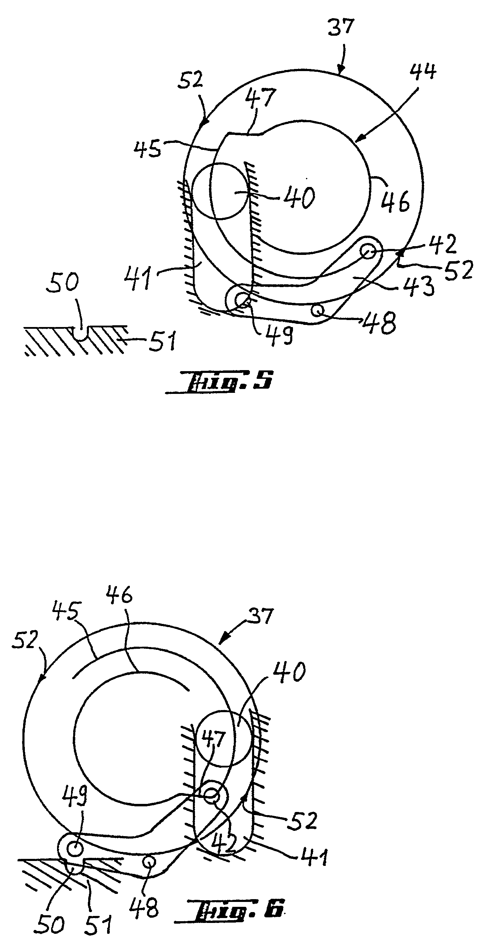

Das Verfahren des Meßkopfes 4 erfolgt mit Hilfe eines in den Fig. 3 und 4 dargestellten Meßwagens 15. Der Meßwagen 15 ist in den Fig. 3 und 4 ohne die optischen und optoelektronischen Komponenten dargestellt, die die Erfassung des Remissions-Spektrums gestatten. In den Fig. 3 und 4 erkennt man lediglich einige Befestigungslöcher 16 für die optischen und optoelektronischen Komponenten.

Der Meßwagen 15 ist innerhalb des Gehäuses 1 längs verschieblich geführt, was bei dem in den Fig. 3 und 4 dargestellten Ausführungsbeispiel mit Hilfe zweier Führungsstangen 17, 18 geschieht, die sich zwischen Befestigungspfosten 19 bis 22 erstrecken. Der Meßwagen 15 verfügt über mehrere Ausleger 23 bis 25, in denen Gleitbüchsen vorgesehen sind, die es gestatten, den Meßwagen 15 reibungsarm zwischen der in Fig. 3 gezeigten Ruheposition und der in Fig. 4 gezeigten Meßposition, die der Arbeitsstellung des Meßkopfes 4 zugeordnet ist, zu verschieben.

Auf dem mit den Auslegern 23 bis 25 versehenen, im wesentlichen plattenförmigen Teil des Meßwagens 15 ist rechtwinklig eine Lagerplatte 26 befestigt, in der eine Motorwelle 27, eine Getriebewelle 28, eine Antriebswelle 29 und eine Gitterwelle 30 drehbar und in axialer Richtung nicht verschiebbar befestigt sind.

Die Gitterwelle 30 ragt in eine in der Zeichnung nicht dargestellte Spektralkammer hinein und dient zur Befestigung einer Halterung für ein Beugungsgitter eines Monochromators zur Spektralanalyse des vom Meßkopf 4 erfaßten Lichtes. Je nach der Drehstellung der Gitterwelle 30 ist der Monochromator auf eine Lichtwellenlänge im sichtbaren Bereich abgestimmt. Das Durchstimmen des sichtbaren Lichtwellenlängenbereiches erfolgt mit Hilfe eines Antriebsmotors 31, der einerseits den Gitterantrieb und andererseits den Meßwagenantrieb vornimmt.

Der Antriebsmotor 31 ist an dem in den Fig. 3 und 4 rechten Ende der Lagerplatte 26 befestigt, die, wie in den Fig. 3 und 4 erkennbar ist, rechts über den sich im wesentlichen parallel zum Boden 6 des Gehäuses 1 erstreckenden Teil des Meßwagens 15 herausragt. Über die Motorwelle 27 treibt der Antriebsmotor 31 ein erstes Ritzel 32 eines Getriebes 33 an, das zusammen mit einem Getriebezahnrad 34 die erste Untersetzungsstufe des Getriebes 33 bildet. Das Getriebezahnrad 34 ist drehfest mit der Getriebewelle 28 verbunden und treibt ein zweites Ritzel 35 an, das mit der Außenverzahnung 36 eines Antriebstellers 37 kämmt.

Der Antriebsteller 37 bildet zusammen mit dem zweiten Ritzel 35 eine zweite Untersetzungsstufe des Getriebes 33 und überträgt über die Antriebswelle 29 ein Drehmoment auf eine dritte Untersetzungsstufe, die aus einem dritten Ritzel 38 und einem Zahnsegment 39 besteht, das drehfest an der Gitterwelle 30 befestigt ist und ein Verschwenken der Gitterwelle 30 zwischen einem Anfangswinkel und einem Endwinkel gestattet. Zur Verminderung des Zahnspiels ist das Zahnsegment 39 mit einer in der Zeichnung nicht dargestellten Feder vorgespannt. Da der Antriebsmotor 31 die Gitterwelle 30 über ein starres Zahnradgetriebe antreibt, kann die Drehstellung des an der Gitterwelle 30 befestigten Beugungsgitters oder eines sonstigen Gegenstandes, insbesondere eines Filters, positionsgenau eingestellt werden.

Die Motorposition muß dabei sehr genau bekannt sein, da von ihr die Lage des Beugungsgitters und somit des jeweils erfaßten Spektralbereichs abhängt. Bei dem Antriebsmotor 31 handelt es sich um einen Gleichstrommotor, dessen Motordrehzahl mittels PLL geregelt wird. Die Sollfrequenz liefert der Quarz des Mikroprozessors der Meßwertverarbeitungs- und Steuerlogik. Dabei wird die Quarzfrequenz von einem Timer im Prozessor runtergeteilt. Die Istfrequenz liefert ein Inkremental-Geber am Antriebsmotor 31 mit 120 Inkrementen pro Umdrehung. Auf diese Weise wird gewährleistet, daß der Antriebsmotor 31 quarzgenau dreht.

Die spezielle Art des verwendeten Phasendetektors, der als synchroner Automat aufgebaut ist, erlaubt es zudem, anfällige Fehlersituationen, zum Beispiel einmaliges Aushängen des PLL, zuverlässig zu erkennen. Zur Absolutpositions-Erfassung des Gitter-/Meßwagenantriebs dienen zwei in der Zeichnung ebenfalls nicht dargestellte Lichtschranken, von denen die eine eine Geberscheibe am Antriebsteller 37 und die andere eine Geberscheibe an der Motorwelle 27 abtastet. Beide Geberscheiben zusammen erlauben die Feststellung der Absolutposition des Meßwagens 15 und die absolut genaue Erkennung der Position des Antriebsmotors 31. Der Fachmann erkennt ohne weiteres, daß mit einer einzigen Geberscheibe beides nicht hätte erfüllt werden können, denn sowohl die Motorwelle 27 als auch die Antriebswelle 29 machen pro Meßlauf mehr als eine Umdrehung. An der Antriebswelle 29 ist die Genauigkeit der Positionserfassung wegen der zwischengeschalteten ersten und zweiten Untersetzungsstufe wesentlich geringer und für die bei dem beschriebenen Handgerät erforderliche Genauigkeit ungenügend.

Wie bereits erwähnt, dient der Antriebsmotor 31 nicht nur zum Antrieb der Gitterwelle 30, sondern auch dazu, den Meßwagen 15 zwischen den in den Fig. 3 und 4 veranschaulichten Positionen zu verschieben. An der von der Lagerplatte 26, die mit dem Meßwagen 15 gemeinsam verschiebbar ist, wegweisenden Seite ist der Antriebsteller 37 mit einem Kurbelzapfen 40 versehen, der zur Reduzierung von Reibungsverlusten vorzugsweise kugelgelagert drehbar ist. Wie man in den Fig. 3 bis 8 erkennen kann, ist der Kurbelzapfen 40 in der Nähe des äußeren Umfangs des Antriebstellers 37 angeordnet und gestattet eine Verschiebung des Meßwagens 15 um den doppelten Abstand des Kurbelzapfens 40 vom Mittelpunkt des Antriebstellers 37.

Der Wagenweg des Meßwagens 15 beträgt beispielsweise 23 mm und der Gitterdrehwinkel für die Messung 14°.

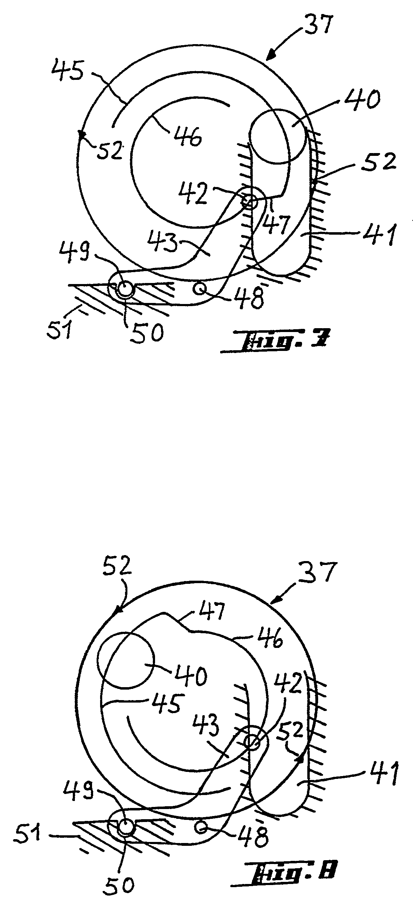

Der Kurbelzapfen 40 greift bei der in den Fig. 3 und 5 dargestellten Ruheposition in eine gerade verlaufende Kulissenführungsnut 41 ein, die in einem Bauteil vorgesehen ist, das ortsfest mit dem Boden 6 verbunden ist. Wenn der Antriebsmotor 31 den Antriebsteller 37 in Blickrichtung auf die mit dem Kurbelzapfen versehene Fläche des Antriebstellers 37 entgegen dem Uhrzeigersinn dreht, gleitet der Kurbelzapfen 40 zunächst innerhalb der Kulissenführungsnut 41 weiter in Richtung auf den Boden 6, wobei von der Antriebswelle 29 eine Kraft auf die Lagerplatte 26 und den Meßwagen 15 ausgeübt wird, durch die der Meßwagen 15 in Fig. 3 nach links verschoben wird.

Wenn die Antriebswelle 29 mit der Kulissenführungsnut 41 fluchtet, beginnt der Kurbelzapfen 40 in der Kulissenführungsnut 41 vom Boden 6 weg nach oben zu gleiten, wobei der Meßwagen 15 weiter bis in die in Fig. 4 gezeigte Stellung nach links geschoben wird. Sobald der Kurbelzapfen 40 in der Höhe der Antriebswelle 29 liegt, kommt er aus dem Eingriff der dort mit einer Öffnung endenden Kulissenführungsnut 41 heraus. Das offene obere Ende der Kulissenführungsnut 41 ist so gewählt, daß die Bewegung des Meßwagens 15 nach links aufläuft, ohne daß bereits eine Rückwärtsbewegung einsetzt. In Richtung auf den Boden 6 hat die Kulissenführungsnut eine Tiefe, die sicherstellt, daß der Kurbelzapfen 40 nicht gegen den Boden der Kulissenführungsnut 41 anschlägt. Wie man in den Fig. 5 bis 8 erkennt, ist die Öffnung der Kulissenführungsnut 41 leicht entsprechend der Bewegungsrichtung des Kurbelzapfens 40 verrundet.

Wenn der Kurbelzapfen 40 nach oben aus der Öffnung der Kulissenführungsnut 41 heraustritt, endet die Kraft zum Verschieben des Meßwagens 15, jedoch kann sich der Antriebsteller 37 weiter drehen. Hierdurch ist es möglich, die Gitterwelle 30 nicht nur in der nicht erforderlichen, aber nicht störenden Weise während des Verschiebens des Meßwagens 15, sondern auch dann mit Hilfe des Antriebsmotors 31 zu verdrehen, wenn der Meßwagen 15 die in Fig. 4 dargestellte vorgeschobene Meßposition erreicht hat. In dieser Position ist es auch möglich, den Antriebsmotor so zu steuern, daß die Gitterwelle 30 mehrfach links und rechts gedreht wird, um einen Spektralbereich mehrfach abzutasten. Da während dieser Zeit der Kurbelzapfen 40 nicht mehr im Eingriff mit der Kulissenführungsnut 41 steht, wird der Meßwagen 15 vom Antriebsmotor 31 nicht mehr beeinflußt. Um jedoch sonstige äußere Einflüsse auf die Position des Meßwagens 15 auszuschließen, ist eine Arretiervorrichtung vorgesehen, die weiter unten beschrieben ist.

Wenn der Meßwagen 15 aus der in Fig. 4 dargestellten Meßposition in die in Fig. 3 dargestellte Ruheposition zurückkehren soll, wird der Antriebsmotor 31 von der Meßwertverarbeitungs- und Steuerlogik so lange in umgekehrter Drehrichtung betrieben, bis der sich dann im Uhrzeigersinn drehende Antriebsteller 37 mit seinem Kurbelzapfen 40 wieder in die Kulissenführungsnut 41 eingreift und nach etwa einer halben Umdrehung den Meßwagen 15 wieder in die in Fig. 3 dargestellte Ruheposition verschoben hat. Dabei laufen die oben beschriebenen Vorgänge genau umgekehrt ab.

In der Ruheposition ist die Lage des Meßwagens 15 stabil, da der Kurbelzapfen 40 auf einem Totpunkt liegt und zusätzlich eine Abstützung durch einen Abtaststift 42 erfolgt, der an einem Verriegelungshebel 43 befestigt ist und in eine Steuernut 44 eingreift, die auf der dem Kurbelzapfen 40 gegenüberliegenden Seite des

EP 0 328 483 B1

Antriebstellers 37 ausgebildet ist. Die Steuernut 44 hat den in den Fig. 5 bis 8 erkennbaren Verlauf und besteht aus einer ersten Steuerkurve 45 mit einem größeren Durchmesser und einer zweiten Steuerkurve 46 mit einem kleineren Durchmesser. Die erste Steuerkurve 45 erstreckt sich über einen Winkel von etwa 180°, während die zweite Steuerkurve sich über einen Winkel von etwa 270° erstreckt. Zwischen der ersten Steuerkurve 45 und der zweiten Steuerkurve 46 befindet sich eine Schaltkurve 47, die einen Drehwinkel von einigen Grad überbrückt.

Wenn der Abtaststift 42 in der Steuernut 44 entlang der ersten Steuerkurve 45, der Schaltkurve 47 und der zweiten Steuerkurve 46 geführt wird, hat er über die erste Steuerkurve 45 einen ersten vorgegebenen Abstand und über die zweite Steuerkurve 46 einen zweiten vorgegebenen Abstand. Die Abstandsänderung beim Durchlaufen der Schaltkurve 47 wird dazu ausgenutzt, den Meßwagen 15 in der Meßposition zu verriegeln, solange der Kurbelzapfen 40 in der in den Fig. 4 und 8 dargestellten Weise nicht mit der Kulissenführungsnut 41 im Eingriff steht.

Der Abtaststift 42 ist bei dem in der Zeichnung dargestellten Ausführungsbeispiel am rechten Ende des Verriegelungshebels 43 angeordnet. Der Fachmann erkennt ohne weiteres, daß auch eine Ausgestaltung möglich ist, bei der das linke Ende des Verriegelungshebels 43 mit dem Abtaststift 42 versehen ist. Der Verriegelungshebel 43 ist an einer Hebelachse 48 drehbar befestigt, die ihrerseits in der Lagerplatte 26 befestigt ist. An dem dem Abtaststift 42 gegenüberliegenden Ende verfügt der zweiarmige Verriegelungshebel 43 über einen Verriegelungszapfen 49, der beim Durchfahren der Schaltkurve 47 durch den Abtaststift 42 abgesenkt oder angehoben werden kann.

Aus den Fig. 4, 6, 7 und 8 geht hervor, daß dem Verriegelungszapfen 49 eine Verriegelungsnut 50 zugeordnet ist, die in einem Verriegelungsstück 51 an der Stelle ausgebildet ist, an der sich der Verriegelungszapfen 49 befindet, wenn der Abtaststift 42 die Schaltkurve 47 durchläuft.

Die Fig. 5 bis 8 veranschaulichen zusammenfassend die Kinematik des Meßwagenantriebs und der Meßwagenverriegelung.

In Fig. 5 erkennt man den gegen den Anfang der ersten Steuerkurve 45 abgestützten Abtaststift 42 und den Verriegelungshebel 43 mit angehobenem Verriegelungszapfen 49. Der Kurbelzapfen 40 befindet sich am oberen Ende der Kulissenführungsnut 41. Durch Drehen des schematisch dargestellten Antriebstellers 37 in Richtung der Pfeile 52 erfolgt eine Verschiebung des Antriebstellers 37 und der übrigen am Meßwagen 15 befestigten Bauteile nach links, bis nach einer Drehung des Antriebstellers 37 um 180° die in Fig. 6 dargestellte Lage erreicht ist. Während der Drehung des Antriebstellers 37 hat sich die Gitterwelle 30 ebenfalls gedreht, jedoch liegt der zugehörige Spektralbereich außerhalb des Meßbereichs, so daß diese Verdrehung wirkungslos und nicht störend ist.

Ausgehend von der Darstellung in Fig. 6 beginnt sich der Verriegelungshebel 43 entgegen dem Uhrzeigersinn um die Hebelachse 48 zu verschwenken, wobei der Abtaststift 42 entlang der Schaltkurve 47 gleitet, die durch eine Nut oder einen sonstigen Anschlag im Antriebsteller oder auf dem Antriebsteller mechanisch realisiert sein kann.

Wenn der Abtaststift 42 den Übergang zwischen der Schaltkurve 47 und der zweiten Steuerkurve 46 erreicht hat, ist der Verriegelungszapfen 49 in der in Fig. 7 dargestellten Weise abgesenkt. Dabei greift der Verriegelungszapfen 49 in die Verriegelungsnut 50 im ortsfesten Verriegelungsstück 51 ein. Die der Fig. 7 zugeordnete Drehstellung der Gitterwelle 40 entspricht dem Anfang des von dem Beugungsgitter zu überstreichenden Meßbereichs. Durch das Einklinken des Verriegelungszapfens 49 in die Verriegelungsnut 50 ist sichergestellt, daß während des Abtastens der Meßwagen 15 stillsteht bis die Messung ausgeführt ist.

Während in Fig. 7 der Kurbelzapfen 40 die Kulissenführungsnut 41 gerade verläßt, befindet sich in Fig. 8 der Kurbelzapfen 40 ganz außerhalb der Kulissenführungsnut 41. Der Meßwagen 15 ist nunmehr ausschließlich durch die beschriebene Verriegelungseinrichtung verriegelt und der Antriebsmotor 31 dient nunmehr lediglich zum Verdrehen der Gitterwelle 30. Aus den Zeichnungen ergibt sich, daß ausgehend von Fig. 7 eine Drehung des Antriebstellers 37 von mehr als 180° möglich ist, wobei jedoch der Drehwinkel von der dritten Untersetzung stark untersetzt wird, bevor er dazu dient, die Gitterwelle 30 über das Zahnsegment 39 präzise zu verdrehen.

Die obigen Ausführungen zeigen, daß der Meßwagen 15 bei jeder Messung mit Hilfe des Antriebsmotors 31 in die Meßposition vorgefahren wird. Dort bleibt er still stehen bis die Messung ausgeführt ist. Während der Messung verdreht sich das Beugungsgitter bei feststehendem Meßwagen 15. Das Beugungsgitter verdreht sich zwar auch schon während des Wagenvorlaufs, jedoch ist dies nicht störend. Sowohl in der Meß- als auch in der Ruheposition wird der Meßwagen 15 stabil gehalten und kann nicht ungewollt aus dem Handgerät heraus- oder hineingeschoben werden. Das Getriebe 33 gestattet einen äußerst exakten Gitterantrieb mit einem Gitterdrehwinkel, der zum Beispiel 14° beträgt.

Das oben beschriebene Antriebsprinzip gestattet es, das Beugungsgitter und den Meßwagen 15 mit Hilfe eines einzigen Antriebsmotors 31 präzise anzutreiben.

5

**Patentansprüche**

1. Handgerät zur Erfassung photometrischer Daten mit einer Standfläche (6) zur Auflage auf einer ebenen Meßfläche sowie mit einem im wesentlichen geradlinig und parallel zur Standfläche (6) im Gehäuse (1) verschiebbar angeordneten Meßkopf (4), der zwischen einer Ruheposition, in der eine zur Positionierung des Handgerätes auf der Meßfläche dienende Meßblende (8) für den Benutzer sichtbar ist, und einer Arbeitsposition, in der er diese Meßblende (8) überdeckt, hin und her bewegbar ist, wobei der Meßkopf (4) an einem motorisch verschiebbar im Gehäuse (1) des Handgerätes gelagerten Meßwagen (15) angeordnet ist, an dem ein Antriebsmotor (31) mit diesem mitbeweglich befestigt ist, und zum Antrieb des Meßwagens (15) ein vom Antriebsmotor (31) betätigter Antriebsteller (37) mit einem Kurbelzapfen (40) vorgesehen ist, der in eine im Gehäuse (1) ortsfest angeordnete Kulissenführung (41) eingreift, **dadurch gekennzeichnet,** daß der Antrieb des Meßwagens (15, 26) mit einer Welle (30) gekoppelt ist, die mit einem optischen Element verbunden ist, durch dessen Drehposition der Wellenlängenbereich des Messkopfes (4) durchstimmbar ist, und dass der Kurbelzapfen (40) mit Beginn des Messvorgangs aus der ortsfesten Kulissenführung (41) herausdrehbar ist.

2. Handgerät nach Anspruch 1, **dadurch gekennzeichnet,** daß bei freigegebenem Kurbelzapfen eine Verriegelungseinrichtung (42 bis 51) zum Arretieren des Meßwagens (15) aktiviert ist.

3. Handgerät nach Anspruch 1 oder 2, **dadurch gekennzeichnet,** daß die Welle (30) mit der Halterung für ein Beugungsgitter eines Monochromators verbunden ist.

4. Handgerät nach einem der Ansprüche 1 bis 3, **dadurch gekennzeichnet,** daß der Antriebsteller (37) über ein Getriebe mit zwei Untersetzungsstufen (32 bis 36) durch den Antriebsmotor (31) angetrieben ist.

5. Handgerät nach Anspruch 4, **dadurch gekennzeichnet,** daß auf der Motorwelle (27) und der den Antriebsteller (37) tragenden Antriebswelle (29) jeweils eine Geberscheibe angeordnet ist, die zur Positionserfassung des Meßwagens (15) und der Welle (30) über Lichtschranken abtastbar sind.

6. Handgerät nach einem der vorstehenden Ansprüche, **dadurch gekennzeichnet,** daß der Antriebsmotor (31) ein Gleichstrommotor ist, dessen Drehzahl mittels einer PLL-Schaltung geregelt ist, wobei die Sollfrequenz vom Quarz eines Mikroprozessors einer Meßwertverarbeitungs- und Steuerlogik und die Istfrequenz von einem Inkrementalgeber am Antriebsmotor (31) geliefert wird.

7. Handgerät nach einem der vorstehenden Ansprüche, **dadurch gekennzeichnet,** daß der Kurbelzapfen (40) in der Nähe des eine Außenverzahnung (36) aufweisenden Umfangs des Antriebstellers (37) drehbar befestigt ist.

8. Handgerät nach einem der vorstehenden Ansprüche, **dadurch gekennzeichnet,** daß die Kulissenführung (41) einen sich im wesentlichen rechtwinklig zur standfläche (6) erstreckenden Kanal aufweist.

9. Handgerät nach Anspruch 8, **dadurch gekennzeichnet,** daß die Kulissenführung (41) an ihrem von der standfläche (6) wegweisenden Ende eine in Bewegungsrichtung des Kurbelzapfens (40) leicht gekrümmte Öffnung aufweist.

10. Handgerät nach Anspruch 2, **dadurch gekennzeichnet,** daß die Verriegelungseinrichtung einen zweiarmigen Verriegelungshebel (43) aufweist, der an einem Ende einen Abtaststift (42) aufweist, der in eine Steuernut (44 bis 47) eingreift, die auf der dem Kurbelzapfen (40) gegenüberliegenden Seite des Antriebstellers (37) ausgebildet ist, wobei das andere Ende des Verriegelungshebels (43) mit einem Verriegelungsstift (49) versehen ist, der in eine Verriegelungsnut (50) absenkbar ist, die mit der standfläche (6) fest verbunden ist.

11. Handgerät nach Anspruch 10, **dadurch gekennzeichnet,** daß die Steuernut (44 bis 47) eine Schaltkurve (47) aufweist, die eine erste Steuerkurve (45) größeren Durchmessers mit einer zweiten Steuerkurve (46) kleineren Durchmessers an einer Stelle verbindet, an der sich der Abtaststift (42) befindet, wenn der Kurbelzapfen (40) im Begriff ist, die Kulissenführung (41) zu verlassen.

12. Handgerät zur Erfassung photometrischer Daten mit einer Standfläche (6) zur Auflage auf einer ebenen Meßfläche sowie mit einem Meßkopf (4), der zwischen einer Ruheposition und einer Arbeitsposition motorisch verschiebbar im Gehäuse (1) des Handgerätes gelagert ist, wobei zum Antrieb eines den Meßkopf (4) tragenden Meßwagens (15) ein Antriebsmotor (31) mit einem dem Meßwagen (15) zugeordneten Getriebe (37, 40) vorgesehen ist, welches durch einen vom Antriebsmotor (31) betätigten Antriebsteller (37) mit einem Kurbelzapfen (40) gebildet ist, der in eine im Gehäuse (1) ortsfest angeordnete Kulissenführung (41) eingreift, dadurch gekennzeichnet, dass der Kurbelzapfen (40) mit Beginn des Messvorgangs aus der ortsfesten Kulissenführung (41) herausdrehbar ist, und dass dem Antriebsmotor (31) ein Getriebe (38, 39) zum Verdrehen einer Welle (30) zugeordnet ist, die mit einem Beugungsgitter eines durchstimmbaren Monochromators verbunden ist.

**Claims**

1. Manual device for determining photometric data, comprising a support surface (6) to be placed on a flat

EP 0 328 483 B1

measuring surface and comprising a measuring head (4) mounted in a housing (1) so as to be displaceable in a substantially straight-line manner and parallel to the support surface (6), which measuring head (4) is displaceable to and fro between a rest position, in which a measuring diaphragm (8) serving to position the manual device on the measuring surface is visible to the user, and a working position, in which the measuring head covers that measuring diaphragm (8), the measuring head (4) being mounted on a motor-driven measuring carriage (15) located in the housing (1) of the manual device, to which measuring carriage (15) a drive motor (31) is fastened so as to be movable therewith, and, in order to drive the measuring carriage (15), a drive pulley (37) actuated by the drive motor (31) is equipped with a crank pin (40) which engages a slide guide (41) mounted to be stationary in the housing (1), wherein the drive of the measuring carriage (15, 26) is coupled to a shaft (30) which is connected to an optical element by whose rotational position the wavelength range of the measuring head (4) can be varied, and the crank pin (40) may be rotated out of the stationary slide guide (41) at the beginning of the measuring process.

2. Manual device according to claim 1, wherein, when the crank pin is released, a locking device (42 to 51) for immobilizing the measuring carriage (15) is actuated.

3. Manual device according to claim 1 or claim 2, wherein the shaft (30) is connected to the holder for a diffraction grating of a monochromator.

4. Manual device according to any one of claims 1 to 3, wherein the drive pulley (37) is driven by the drive motor (31) via a gear with two reduction stages (32 to 36).

5. Manual device according to claim 4, wherein encoder disks are respectively mounted on the motor shaft (27) and the drive shaft (29) carrying the drive pulley (37), which encoder disks can be scanned by means of light barriers in order to determine the position of the measuring carriage (15) and the shaft (30).

6. Manual device according to any one of the preceding claims, wherein the drive motor (31) is a dc motor the rotational speed of which is regulated by means of a PLL circuit, the nominal frequency being provided by the quartz crystal clock of a microprocessor of a data-processing and control logic and the actual frequency being provided by a generator recording incremental movement of the drive motor (31).

7. Manual device according to any one of the preceding claims, wherein the crank pin (40) is rotatably mounted in the vicinity of the circumference of the drive pulley (37), which circumference has external toothing (36).

8. Manual device according to any one of the preceding claims, wherein the slide guide (41) comprises a channel extending substantially at right angles to the support surface (6).

9. Manual device according to claim 8, wherein the slide guide (41) has at its end remote from the support surface (6) an opening that curves slightly in the direction of motion of the crank pin (40).

10. Manual device according to claim 2, wherein the locking device comprises a dual-arm locking lever (43) which at one end carries a scanning pin (42) which engages a control groove (44 to 47) formed on the side of the drive pulley (37) facing the crank pin (40), the other end of the locking lever (43) being equipped with a locking pin (49) that may be lowered into a locking groove (50) fixedly connected to the support surface (6).

11. Manual device according to claim 10, wherein the control groove (44 to 47) comprises a switching curve (47) which connects a first control curve (45), having a larger diameter, to a second control curve (46), having a smaller diameter, at a point where the scanning pin (42) is located when the crank pin (40) is about to leave the slide guide (41).

12. Manual device for determining photometric data, comprising a support surface (6) to be placed on a flat measuring surface and comprising a measuring head (4) mounted in the housing (1) of the manual device so as to be motor-driven between a rest position and a working position, there being provided in order to drive a measuring carriage (15) carrying the measuring head (4) a drive motor (31) having a gear (37, 40) associated with the measuring carriage (15), which gear is formed by a drive pulley (37) actuated by the drive motor (31) and having a crank pin (40) which engages a slide guide (41) arranged stationary in the housing (1), wherein the crank pin (40) may be rotated out of the stationary slide guide (41) at the beginning of the measuring process, and a gear (38, 39) is associated with the drive motor (31) to rotate a shaft (30) connected to a diffraction grating of a tunable monochromator.

## Revendications

1. Appareil à main destiné à capter des données photométriques, cet appareil comportant une surface de base (6) destinée à être placée sur une surface de mesure plane, ainsi qu'une tête de mesure (4) disposée dans le corps (1) de manière à pouvoir être déplacée de façon sensiblement rectiligne et parallèlement à la surface de base (6), tête qui peut être déplacée dans un sens et dans l'autre entre une position de repos, dans laquelle un cache (8) de mesure servant au positionnement de l'appareil à main sur la surface de mesure est visible pour l'utilisateur, et une position de travail, dans laquelle cette tête recouvre le cache de mesure (8), la tête de mesure (4) étant disposée sur un chariot de mesure (15) monté dans le corps (1) de l'appareil à main de façon à pouvoir être déplacé au moyen d'un moteur, et auquel est fixé un moteur (31) d'entraînement qui se déplace en même temps que le chariot, un plateau d'entraînement (37), comportant un tourillon (40) de manivelle, actionné par le moteur d'entraînement (31) étant prévu pour l'entraînement du chariot de mesure (15), lequel tourillon (40) de manivelle pénètre dans une coulisse (41) disposée de façon fixe dans le corps (1), appareil caractérisé en ce que l'entraînement du chariot de mesure (15, 26) est couplé à un arbre (30) qui est relié à un élément optique, dont la position de rotation permet de faire varier et d'accorder le domaine de longueur d'onde de la tête de mesure ; et en ce que le tourillon (40) de manivelle peut, au début de l'opération de mesure, être sorti par rotation hors de la coulisse fixe (41).

2. Appareil à main selon la revendication 1, caractérisé en ce que le tourillon de manivelle étant libéré, un dispositif de verrouillage (42 à 51) est activé en vue de bloquer le chariot de mesure (15).

3. Appareil à main selon la revendication 1 ou 2, caractérisé en ce que l'arbre (30) est relié au support d'un réseau de diffraction d'un monochromateur.

4. Appareil à main selon l'une des revendications 1 à 3, caractérisé en ce que le plateau d'entraînement (37) est entraîné par le moteur d'entraînement (31), par l'intermédiaire d'un ensemble d'engrenages à deux étages de démultiplication (32 à 36).

5. Appareil à main selon la revendication 4, caractérisé en ce, sur chacun des arbres (27) de moteur et (29) d'entraînement, portant le plateau d'entraînement (37), est disposé un disque indexé, ces disques pouvant être explorés par l'intermédiaire de barrières lumineuses en vue de capter la position du chariot (15) de mesure et de l'arbre (30).

6. Appareil à main selon l'une des revendications précédentes, caractérisé en ce que le moteur d'entraînement (31) est un moteur à courant continu, dont la vitesse de rotation est régulée au moyen d'un commutateur à boucle de verrouillage de phase (PLL), la fréquence nominale étant délivrée à partir du quartz d'un microprocesseur d'un circuit logique de traitement de valeurs de mesure et de commande et la fréquence réelle étant délivrée, par un capteur incrémentiel, au moteur (31) d'entraînement.

7. Appareil à main selon l'une des revendications précédentes, caractérisé en ce que le tourillon (40) de manivelle est fixé de façon rotative à proximité de la périphérie du plateau de réglage d'entraînement (37), lequel présente une denture extérieure (36).

8. Appareil à main selon l'une des revendications précédentes, caractérisé en ce que la coulisse (41) présente un passage qui s'étend sensiblement perpendiculairement à la surface de base (6).

9. Appareil à main selon la revendication 8, caractérisé en ce que la coulisse (41) présente, à son extrémité opposée à la surface de base (6), une ouverture légèrement incurvée dans la direction de déplacement du tourillon (40) de manivelle.

10. Appareil à main selon la revendication 2, caractérisé en ce que le dispositif de verrouillage présente un levier de verrouillage (43), à deux bras, qui est doté à une extrémité d'une tige palpeuse (42) pénétrant dans une gorge de commande (44 à 47) qui est réalisée sur le côté du plateau (37) d'entraînement situé à l'opposé du tourillon (40) de manivelle, l'autre extrémité du levier de verrouillage (43) étant munie d'une tige de verrouillage (49), qui peut être abaissée dans une gorge (50) de verrouillage et qui est fixée à la surface de base (6).

11. Appareil à main selon la revendication 10, caractérisé en ce que la gorge de commande (44 à 47) présente une came de commutation (47), qui relie une première came de commande (45), d'un plus grand diamètre, à une deuxième came (46), de plus faible diamètre, en un emplacement où se trouve la tige palpeuse (42), lorsque le tourillon (40) de manivelle est sur le point de quitter la coulisse (41).

12. Appareil à main destiné à capter des données photométriques, cet appareil comportant une surface de base (6) destinée à être placée sur une surface plane de mesure, ainsi qu'une tête de mesure (4) qui est montée dans le corps (1) de l'appareil à main de façon à pouvoir être déplacée au moyen d'un moteur entre une position de repos et une position de travail, un moteur d'entraînement (31) étant prévu pour l'entraînement d'un chariot (15) de mesure portant la tête de mesure (4) et comportant un ensemble d'engrenages (37, 40) associé au chariot de mesure (15) et qui est constitué par un plateau d'entraînement (37) actionné par un moteur d'entraînement (31) et comportant un tourillon (40) de manivelle qui pénètre dans une coulisse (41) disposée de façon fixe dans le corps (1), appareil caractérisé en ce qu'au début du processus de mesure, le tourillon (40) de manivelle peut être sorti hors de la coulisse fixe (41) et en ce qu'un ensemble (38, 39) d'engrenages est associé au moteur d'entraînement (31) pour faire tourner un arbre (30) qui est relié à un réseau de diffraction d'un monochromateur susceptible d'être accordé.

Fig. 1

Fig. 2

Fig. 3

EP 0 328 483 B1

*Fig. 4.*

**Fig. 5**

**Fig. 6**

Fig. 7

Fig. 8